# EUROPEAN PATENT SPECIFICATION

(11) **EP 0 715 385 B1**
(45) Date of publication and mention of the grant of the patent: **15.10.1997**
(21) Application number: 95118331.8
(22) Date of filing: 22.11.1995
(51) Int. Cl.: H02G 3/00, B60R 16/02, H02G 3/26, H01R 13/58

(54) **Improved strain relief member for insulated cable**
Zugentlastungsvorrichtung für isolierte Kabel
Dispositif de décharge de contrainte pour câble isolé

(30) Priority: 02.12.1994 FR 9414529; 23.02.1995 FR 9502114
(43) Date of publication of application: 05.06.1996
(73) Proprietor: THE WHITAKER CORPORATION, Wilmington, Delaware 19808 (US)
(72) Inventor: Lavedan, Alain, F-78250 Mezy/Seine (FR)
(74) Representative: Heinz-Schäfer, Marion

(56) References cited:
- DE-A- 3 826 474
- FR-A- 1 234 735
- FR-A- 2 569 911
- GB-A- 2 042 817
- US-A- 4 570 032

## Description

This invention relates to an improved strain relief member for holding a cable intermediate its ends.

There are many applications where cables need to be supported in an intermediate position between connection ends, or proximate to a connection end, one such application being the cable of an automobile brake sensor. Such cables are positioned under the chassis of the car and need to be held in a secure manner to ensure that the cable does not get caught on external objects, and furthermore to prevent the weight, inertia and movement of the cable from overstressing the point of connection of the cable to a connector or sensor, thus reducing the life of such connection.

A typical strain relief member for a brake harness cable comprises a plastic or elastomeric member overmoulded on the outer insulation of the cable, this member comprising a radial groove that fits into a complementary cutout of a metal bracket fixed to the automobile. One of the problems of this prior art, is that the strain relief part and cable outer insulation are often of different materials, whereby the bonding between these two materials reduces in effectiveness with time, and separation of the strain relief member from the cable occurs such that it can slide along the cable. Movement of the cable due to vibrations and wind forces, as well as grease, oil and dirt, weaken the bond between the overmoulded strain relief member and the cable outer insulation. Such problems of course occur to many other cables in the engine compartment or under the chassis of the vehicle.

It would therefore be desirable to provide a more effective strain relief member that can tolerate adverse environments as well as mechanical and thermal solicitation as found under the chassis or in the engine compartment of an automobile.

The object of this invention is to provide an improved cable strain relief member that is cost-effective, robust and can withstand harsh environmental and mechanical conditions.

The objects of this invention have been achieved by providing an overmoulded strain relief member for a cable wherein the strain relief member comprises a stamped and formed clip crimped around the outer insulation of the cable over which the strain relief member is fixed.

The preferred embodiment of this invention will now be described in more detail with reference to the figures, whereby;
Figure 1 is a partial cross-sectional view through a strain relief member mounted on a cable;
Figure 2 is an end view of a strain relief clip prior to crimping to the cable;
Figure 3 is a cross-sectional view through the strain relief clip crimped to the cable;
Figure 4 is a cross-sectional view through another embodiment of a strain relief member mounted on a cable; and
Figure 5 is a cross-sectional view through yet another embodiment of a strain relief member.

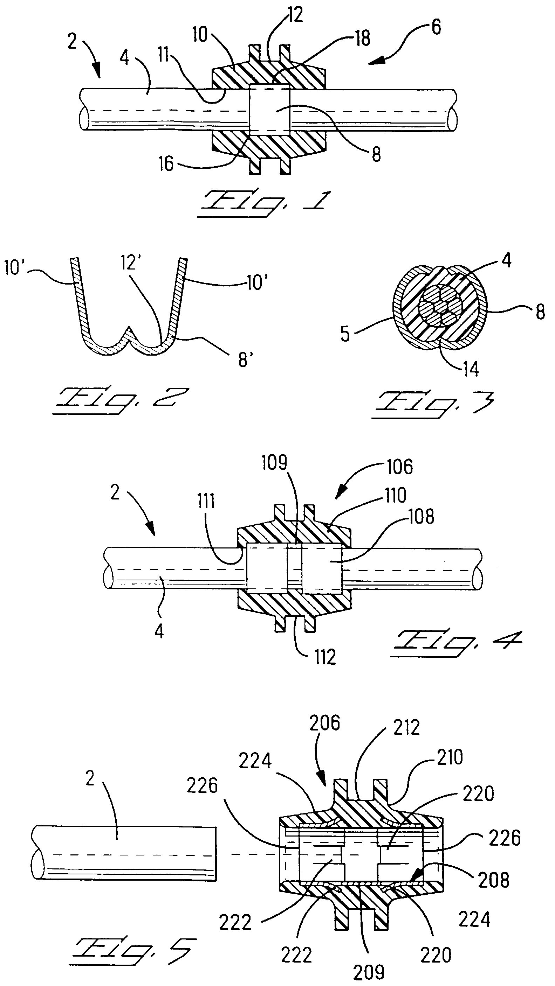

Referring to Figure 1, a cable 2 comprises an outer insulative layer 4 typically of plastic or elastomeric material, and inner conducting strands. A strain relief member 6 comprises a stamped and formed metal clip 8 and a moulded plastic housing 10. The housing 10 is an essentially axi-symmetric part comprising an inner through cavity 11 for receiving the cable 2, and a radial groove 12 for insertion into a complementary cutout of a metal bracket for fixing of the cable thereto. The metal clip 8 is made of a relatively ductile material such as sheet metal typically used for electrical contacts, such that it can be plastically deformed. Figure 2 shows the clip 8' prior to mounting to the cable 2, the clip having a U-shape having opposed crimping arms 10'. The cable 2 can be positioned in the U-shaped recess 12' of the clip 8', and the arms 10' subsequently folded over towards each other to wrap around the outer insulation 4 and dig slightly thereinto. Such a procedure is similar to a crimping procedure of an electrical contact to an electrical conducting wire. The metal clip 8' can also be provided with projections 14 that dig into the outer insulation 4 for increased grip of the clip 8 thereto. The crimp thus provides a secure anchor on the cable 2 for gripping of the strain relief housing 10 thereto.

The strain relief housing 10 can either be overmoulded over the cable and crimped clip 8 whereby a step 16 between the clip and the cable outer insulation 4 provides abutment shoulders for preventing movement of the housing 10 with respect to the cable even under relatively high tensile forces. Most plastics bond very strongly to metals, and the mere provision of the metal clip without step 16 would provide a strong anchor on the cable.

An alternative would be to provide a two part housing that can be latched together around the cable and strain relief clip 8, the inner cavity of the housing having a stepped radial recess 18 of greater diameter than the cable receiving cavity 11, to surround the clip 8 and engage against the shoulders 16 for strong axial retention. The housing 10 could also be provided in a single moulding of two parts that are hinged together and can be closed around the cable and metal clip and then latched together to grip strongly therearound. The latter would also be provided with a similar cavity 11 and recess 18 for receiving the cable 2 and clip 8.

Provision of housings which are latched to the cable rather than overmoulded have the advantage of requiring less manufacturing time and can be produced in a separate location and then assembled to the harness during assembly of the connection ends, this being a more cost-effective manufacturing procedure than overmoulding the cable.

Referring to Figure 4, another embodiment of a strain relief member 106 is shown mounted to the cable 2, the member 106 comprising a stamped and formed metal strain relief clip 108 surrounded by a plastic housing 110 having an internal cavity 111 for receiving the clip and cable therein, and an external circumferential groove 112 similar to the groove 12 of Figure 1. The main difference between the embodiments of Figures 4 and 1 is that the embodiment of Figure 4 has a pair of crimped metal clips 108 similar to the metal clip 8 joined together by a portion of carrier strip 109. The carrier strip 109 could be made part of the carrier strip that interlinks the metal clips 108 during stamping and forming, where every alternate carrier strip is removed to separate the clips 108 therefrom. The carrier strip bridging portion 109 is positioned such that it extends axially across the central position of the strain relief member, in particular the position of the circumferential groove 112. The strain relief housing 110 is supported on a bracket in the groove 112, where the cable must, in certain applications, bend quite sharply away from the metal bracket. As the housing material 110 may sometimes be of elastomeric material which is rather flexible, the embodiment of Figure 4 allows greater bending of the cable about the central position due to the great flexibility of the bridging portion 109. Furthermore, the double clip provides a stronger anchor on the cable than the single clip, for even more strain relief strength.

Another embodiment of this invention is shown in Figure 5 as a strain relief member 206 comprising a housing 210 overmoulded over a stamped and formed metal strain relief clip 208. The housing has a radial groove 212 for insertion into a complementary cutout of a metal bracket similar to the previously described embodiments. The strain relief clip 208 has a pair of clip sections that are joined by a thin flexible strip 209 positioned substantially below the outer radial groove 212 for reasons similar to that described for the embodiment of Figure 4. The spring clip 208 however has a different undeformed (i.e. uncrimped) shape to that shown in Figure 2, the spring clip 208 actually having a cylindrical shape of slightly larger diameter than that of the cable 2 for insertion thereover.

Each of the spring clips 208 has a number of tabs 220 bent obliquely, radially outwards from the main cylindrical body of the spring clips, these tabs 220 embedded in the material of the housing 210 moulded thereover, and serving to securely fasten the metal clip 208 to the housing 210. There are spring clips 220 directed in one direction, and other spring clips 222 directed in an opposing direction to provide a secure fastening of the spring clip to the housing in reaction to forces in both directions along the cable 2. The material of the housing 210 is an elastomeric, or slightly flexible plastic, or deformable plastic.

The strain relief clip 206 is manufactured prior to assembly to the cable 2, and can be assembled at the harness manufacturing site by being inserted over the cable 2, the strain relief clip 208 then being crimped to the cable 2 by means of a crimping tool plastically deforming the metal clip 208 by application of pressure on cylindrical portions 224 of the housing 210 extending axially from both sides of the metal bracket receiving portion 212. The cylindrical walls 224 are sufficiently thin and flexible to allow suitable crimping of the strain relief clip 208 around the cable.

The strain relief member 206 can thus be securely fastened to the cable 2 in a simple manner without requiring overmoulding of a housing over the cable at the harness manufacturing site. The cylindrical portions 224 extend beyond ends 226 of the metal clip 208 thus preventing overbending of the cable at the ends 226 of the metal clip. The latter prevents damage of the cable at the metal clip ends 226, in particular damage caused by mechanical vibration causing the ends to dig, or cut into the cable outer insulation.

Advantageously therefore, provision of a plastically deformable clip securely crimped to the cable for providing an anchor to a strain relief housing enables the strain relief member to support harsh environmental and mechanical conditions in a simple, cost-effective and reliable manner.

## Claims

1. A strain relief member (6,106,206) for assembly to a cable (2) for automotive applications, the strain relief member comprising a plastic or elastomeric housing (10,110,210) having an inner cavity (11,111) for receiving the cable therein and for attachment to the cable, and an outer profile (12,112,212) for attachment to a bracket, characterized in that the strain relief member further comprises a stamped and formed clip (8,108,208) that is plastically deformable around the cable for tightly gripping thereto, the clip assembled within the inner cavity (11,111) of the housing and providing an anchor for robust attachment of the housing (10,110,210) to the cable (2).

2. The strain relief member of claim 1 characterized in that the clip has shoulders (16) engageable with complementary surfaces of the inner cavity (11) to provide a secure anchor on the cable for the housing (10) in relation to forces along the cable.

3. The strain relief member of claims 1 or 2 characterized in that the clip (8,108) is C-shaped prior to assembly, and comprises opposed arms (10') that are plastically deformable to wrap around the cable and dig into the outer insulation (4) thereof.

4. The strain relief member of claims 1-3 characterized in that the housing (10,110,210) comprises a circumferential groove (18) in the cavity (11,111) to fit around the clip (8,108,208).

5. The strain relief member of any preceding claim characterized in that the housing is overmoulded over the cable (2) and crimped clip (8,108).

6. The strain relief member of any of claims 1-4 characterized in that the housing is split and can be latched around the clip (8,108).

7. The strain relief member of any preceding claim characterized in that the clip (8,108) has inward protrusions (14) for projecting into the cable outer insulation (4).

8. The strain relief member of any preceding claim characterized in that the housing outer profile comprises a circumferential groove (12,112,212) for insertion into a complementary cutout of a support bracket.

9. The strain relief member of any preceding claim characterized in that the strain relief clip (108) is comprised of a pair of C-shaped clip sections joined by a portion of carrier strip (109) that extends axially across a central portion of the strain relief member for greater flexibility of the cable about the bracket attachment outer profile (112).

10. The strain relief member of claims 1, 2 or 8 characterized in that the strain relief clip (208) is overmoulded over by the housing (210) and securely attached thereto, the strain relief member insertable over the cable (2) and crimpable thereto.

11. The strain relief member of claim 10 characterized in that the housing (210) has substantially cylindrical extensions (224) moulded over the strain relief clip (208) and being easily deformable to allow crimping of the clip (208) through the extensions.

12. The strain relief member of claims 10 or 11 characterized in that the strain relief clip (208) comprises a pair of crimping portions attached together by a flexible strip (209) that is positioned substantially below the bracket attachment outer profile (212).

13. The strain relief member of claims 10, 11 or 12 characterized in that the strain relief clip (208) comprises radially extending tabs (220, 222) embedded in the housing (210) for axial retention of the housing (210) to the clip (208).

## Patentansprüche

1. Zugentlastungsglied (6, 106, 206) zur Montage an ein Kabel (2) für Kraftfahrzeuganwendungen, wobei das Zugentlastungsglied ein Kunststoff- oder elastomeres Gehäuse (10, 110, 210) mit einem Innenhohlraum (11, 111) zur Aufnahme des Kabels darin und zur Befestigung an dem Kabel und ein Außenprofil (12, 112, 212) zur Befestigung an einer Halterung umfaßt, dadurch gekennzeichnet, daß das Zugentlastungsglied weiterhin eine stanzgeformte Klammer (8, 108, 208) umfaßt, die plastisch um das Kabel verformbar ist, um dieses fest einzuklemmen, wobei die Klammer in dem Innenhohlraum (11, 111) des Gehäuses montiert ist und eine Verankerung zur robusten Befestigung des Gehäuses (10, 110, 210) an dem Kabel (2) bildet.

2. Zugentlastungsglied nach Anspruch 1, dadurch gekennzeichnet, daß die Klammer Schultern (16) aufweist, die mit komplementären Flächen des Innenhohlraums (11) in Eingriff gebracht werden können, um eine sichere Verankerung des Gehäuses (10) an dem Kabel bezüglich entlang dem Kabel wirkenden Kräften zu bilden.

3. Zugentlastungsglied nach Anspruch 1 oder 2, dadurch gekennzeichnet, daß die Klammer (8, 108) vor der Montage C-förmig ist und einander gegenüberliegende Schenkel (10') umfaßt, die plastisch verformt werden können, so daß sie sich um das Kabel wickeln und sich in dessen äußere Isolierung (4) eingraben.

4. Zugentlastungsglied nach den Ansprüchen 1 - 3, dadurch gekennzeichnet, daß das Gehäuse (10, 110, 210) in dem Hohlraum (11, 111) eine Umfangsnut (18) aufweist, die um die Klammer (8, 108, 208) paßt.

5. Zugentlastungsglied nach einem der vorhergehenden Ansprüche, dadurch gekennzeichnet, daß das Gehäuse um das Kabel (2) und die angequetschte Klammer (8, 108) umgespritzt ist.

6. Zugentlastungsglied nach einem der Ansprüche 1 - 4, dadurch gekennzeichnet, daß das Gehäuse geteilt ist und um die Klammer (8, 108) verrastet werden kann.

7. Zugentlastungsglied nach einem der vorhergehenden Ansprüche, dadurch gekennzeichnet, daß die Klammer (8, 108) nach innen ragende Vorsprünge (14) aufweist, die in die äußere Kabelisolierung (4) ragen.

8. Zugentlastungsglied nach einem der vorhergehenden Ansprüche, dadurch gekennzeichnet, daß das Außenprofil des Gehäuses eine Umfangsnut (12, 112, 212) zur Einführung in einen komplementären Ausschnitt einer Stützhalterung umfaßt.

9. Zugentlastungsglied nach einem der vorhergehenden Ansprüche, dadurch gekennzeichnet, daß die Zugentlastungsklammer (108) aus einem Paar C-förmiger Klammerabschnitte besteht, die durch einen Teil eines Trägerstreifens (109) miteinander verbunden sind, der sich in Axialrichtung quer über einen mittleren Teil des Zugentlastungsglieds erstreckt, damit das Kabel um das Außenprofil (112) der Halterungsbefestigung flexibler ist.

10. Zugentlastungsglied nach den Ansprüchen 1, 2 oder 8, dadurch gekennzeichnet, daß die Zugentlastungsklammer (208) von dem Gehäuse (210) umgespritzt und sicher daran befestigt ist, wobei das Zugentlastungsglied auf das Kabel (2) aufgesetzt und daran gequetscht werden kann.

11. Zugentlastungsglied nach Anspruch 10, dadurch gekennzeichnet, daß das Gehäuse (210) im wesentlichen zylindrische Erstreckungen (224) aufweist, die um die Zugentlastungsklammer (208) umgespritzt sind und leicht verformt werden können, damit ein Quetschen der Klammer (208) durch die Erstreckungen gestattet wird.

12. Zugentlastungsglied nach Anspruch 10 oder 11, dadurch gekennzeichnet, daß die Zugentlastungsklammer (208) ein Paar Quetschteile umfaßt, die durch einen flexiblen Streifen (209), der weit unter dem Außenprofil (212) der Halterungsbefestigung positioniert ist, aneinander befestigt sind.

13. Zugentlastungsglied nach den Ansprüchen 10, 11 oder 12, dadurch gekennzeichnet, daß die Zugentlastungsklammer (208) sich radial erstreckende Nasen (220, 222) umfaßt, die in dem Gehäuse (210) eingebettet sind, damit dieses in Axialrichtung an der Klammer (208) festgehalten wird.

## Revendications

1. Elément (6, 106, 206) de soulagement de traction destiné à être monté sur un câble (2) pour des applications à l'automobile, l'élément de soulagement de traction comportant un corps (10, 110, 210) en matière plastique ou élastomérique ayant une cavité intérieure (11, 111) destinée à recevoir le câble et à être fixée sur le câble, et un profil extérieur (12, 112, 212) pour une fixation à une équerre, l'élément de soulagement de traction étant caractérisé en ce qu'il comporte en outre une pince découpée et formée (8, 108, 208) qui peut être soumise à une déformation plastique autour du câble pour l'enserrer étroitement, la pince étant montée dans la cavité intérieure (11, 111) du corps et réalisant un ancrage pour une fixation robuste du corps (10, 110, 210) sur le câble (2).

2. Elément de soulagement de traction selon la revendication 1, caractérisé en ce que la pince comporte des épaulements (16) pouvant porter contre des surfaces supplémentaires de la cavité intérieure (11) pour réaliser un ancrage ferme sur le câble pour le corps (10) par rapport aux forces s'exerçant le long du câble.

3. Elément de soulagement de traction selon l'une des revendications 1 et 2, caractérisé en ce que la pince (8, 108) est en forme de C avant le montage, et comporte des bras opposés (10') qui peuvent être soumis à une déformation plastique pour entourer le câble et mordre dans son isolant extérieur (4).

4. Elément de soulagement de traction selon l'une quelconque des revendications 1 à 3, caractérisé en ce que le corps (10, 110, 210) présente une gorge circonférentielle (18) dans la cavité (11, 111) pour s'emboîter autour de la pince (8, 108, 208).

5. Elément de soulagement de traction selon l'une quelconque des revendications précédentes, caractérisé en ce que le corps est surmoulé sur le câble (2) et la pince sertie (8, 108).

6. Elément de soulagement de traction selon l'une quelconque des revendications 1 à 4, caractérisé en ce que le corps est divisé et peut être verrouillé autour de la pince (8, 108).

7. Elément de soulagement de traction selon l'une quelconque des revendications précédentes, caractérisé en ce que la pince (8, 108) comporte des saillies (14) orientées vers l'intérieur pour pénétrer dans l'isolant extérieur (4) de câble.

8. Elément de soulagement de traction selon l'une quelconque des revendications précédentes, caractérisé en ce que le profil extérieur du corps présente une gorge circonférentielle (12, 112, 212) destinée à être insérée dans une découpure complémentaire d'une équerre de support.

9. Elément de soulagement de traction selon l'une quelconque des revendications précédentes, caractérisé en ce que la pince (108) de soulagement de traction est constituée de deux parties de pince en forme de C reliées par une partie d'une bande (109) de support qui s'étend axialement à travers une partie centrale de l'élément de soulagement de traction pour permettre une plus grande flexibilité du câble autour du profil extérieur (112) de fixation à une équerre.

10. Elément de soulagement de traction selon les revendications 1, 2 ou 8, caractérisé en ce que le corps (210) est surmoulé sur la pince (208) de soulagement de traction et y est attaché fixement, l'élément de soulagement de traction pouvant être inséré sur le câble (2) et pouvant y être serti.

11. Elément de soulagement de traction selon la revendication 10, caractérisé en ce que le corps (210) comporte des prolongements sensiblement cylindriques (224) moulés sur la pince (208) de soulagement de traction et pouvant être aisément déformés pour permettre un sertissage de la pince (208) à travers les prolongements.

12. Elément de soulagement de traction selon les revendications 10 ou 11, caractérisé en ce que la pince (208) de soulagement de traction comporte deux parties à sertir reliées entre elles par une bande flexible (209) qui est positionnée sensiblement au-dessous du profil extérieur (212) de fixation à une équerre.

13. Elément de soulagement de traction selon les revendications 10, 11 ou 12, caractérisé en ce que la pince (208) de soulagement de traction comporte des pattes (220, 222) s'étendant radialement, encastrées dans le corps (210) pour retenir axialement le corps (210) sur la pince (208).
